# EUROPÄISCHE PATENTANMELDUNG

(11) **EP 1 074 444 A2**
(43) Veröffentlichungstag der Anmeldung: **07.02.2001**
(21) Anmeldenummer: 00115545.6
(22) Anmeldetag: 19.07.2000
(51) Int. Cl.: B60S 5/02

(54) **Vorrichtung zur Versorgung von Kraftfahrzeugen**

(30) Priorität: 06.08.1999 DE 19937243
(71) Anmelder: Schmidt, Wolfgang, 21447 Handorf (DE)
(72) Erfinder: Schmidt, Wolfgang, 21447 Handorf (DE)
(74) Vertreter: Schupfner, Georg U.

(57) **Zusammenfassung**

Die Erfindung bezieht sich auf eine Vorrichtung zur Versorgung von Kraftfahrzeugen (14) mit Betriebsmitteln, die mittels eines oder mehrerer Hilfsgeräte (8, 9, 10, 12) während eines Haltes an einer Versorgungsbasis über eine Versorgungsstelle des Kraftfahrzeuges (14) diesem zugeführt werden, wobei die Hilfsgeräte (8, 9, 10, 12) in eine betriebsmäßige Koordinationslage zu der Versorgungsstelle (13) bringbar und wieder von ihr entfernbar sind, wobei die betriebsmäßige Koordinationslage zwischen der einen oder auch weiteren Versorgungsstellen (N, 13) des Kraftfahrzeuges einerseits und den diesen zugeordneten Hilfsgeräten (8, 9, 10) andererseits mittels einer das Kraftfahrzeug (14) aufnehmenden Bodenplattform (7) erreicht wird, die wenigstens in einer Horizontalebene, quasi schwimmend, verstellbar ist, wobei die Verstellung der Bodenplattform (7) mittels einer Steuerung erreichbar ist und die Verstellung dafür sorgt, daß die Versorgungsstellen (N, 13) des Kraftfahrzeuges (14) auf der Bodenplattform (7) gegenüber den zugeordneten Hilfsgeräten (8, 9, 10, 12) außerhalb der Bodenplattform (7) ausgerichtet werden.

## Beschreibung

Die Erfindung bezieht sich auf eine Vorrichtung zur Versorgung eines Kraftfahrzeugs mit Betriebsmitteln, die mittels eines oder mehrerer Hilfsgeräte während eines Haltes an einer Versorgungsbasis über eine oder mehrere Versorgungsstellen des Kraftfahrzeuges diesem zugeführt werden, wobei das (die) Hilfsgerät(e) mittels elektronischer Steuerungsvorrichtungen in eine betriebsmäßige Koordinationslage zu der Versorgungsstelle bringbar und wieder von ihr entfernbar sind.

Aus der DE 42 42 243 A1 ist eine automatische Betankungseinrichtung für Kraftfahrzeuge bekannt. Zur Betankungseinrichtung gehört eine Tankinsel, neben der mindestens ein Tankplatz für ein Kraftfahrzeug und ein Bedienungsterminal vorgesehen sind. Mit einem innerhalb der Tankinsel vorgesehenen Tankroboter ist eine Zapfpistole in den Tankstutzen des Kraftfahrzeuges einführbar. Der Tankroboter ist längs der Tankinsel verfahrbar. Damit der Verfahrweg des Tankroboters nicht zu lang wird, ist zur Grobpositionierung des Kraftfahrzeuges ein Kontaktelement vorhanden, auf dem eines der Räder des Kraftfahrzeuges zu stehen kommt.

Die DE 42 42 244 A1 ergänzt die Lehre aus der DE 42 42 243 A1 in der Weise, daß sie das genaue automatische Andocken der Zapfpistole an den Tankstutzen mit Hilfe von Lageerkennungsmitteln, wie Lichtleitern und Leuchtdioden, beschreibt.

Aus der DE 41 20 060 A1 ist eine Vorrichtung zum Betanken und / oder Waschen eines Fahrzeuges bekannt, in der Fahrzeuge taktweise auf einem Beförderungsband geführt werden und in den Ruhephasen des Beförderungsbandes mit Hilfe einer herkömmlichen Zapfpistole und einer ortsfesten Zapfsäule manuell betankt werden.

Bei Autorennen müssen die Fahrzeuge während des Rennens in eine Versorgungsbox. In dieser Versorgungsbox werden die Turnierfahrzeuge betankt und vor allem auch durch Radwechsel versorgt. Die Betankung könnte automatisch nach den Lehren des Standes der Technik erfolgen. Bedacht werden muß aber, daß das Betanken und der Radwechsel in wenigen Sekunden zur gleichen Zeit erfolgen müssen. Das Suchen der Position des Tankstutzens durch den Tankroboter kostet wertvolle Sekunden. Das Lösen der Räder, ihr Abnehmen, das Aufstecken anderer Räder und das erneute Befestigen erfolgt von Hand in Teamarbeit. Die Teams sind zwar eingespielt; dennoch können Unregelmäßigkeiten zu Zeitverlusten führen.

Es ist Aufgabe der Erfindung, eine Vorrichtung der eingangs erwähnten Art zu schaffen, mit der es möglich ist, die Versorgung eines Fahrzeuges technisch sicherer zu machen und die Versorgungszeit zu verringern.

Die gestellte Aufgabe ist erfindungsgemäß dadurch gelöst, daß zur Versorgung die betriebsmäßig fluchtende Koordinationslage zwischen der einen oder auch weiteren Versorgungsstellen des Kraftfahrzeuges einerseits und den diesen zugeordneten Hilfsgeräten andererseits mittels einer das Kraftfahrzeug aufnehmenden Bodenplattform erreicht wird, die wenigstens in einer Horizontalebene, quasi schwimmend, verstellbar ist, wobei die Verstellung der Bodenplattform mittels einer Steuerungen, welche vorzugsweise mit Hilfe berührungslos wirkender Sensoren angesteuert wird, erreichbar ist und die Verstellung dafür sorgt, daß die Versorgungsstellen des Kraftfahrzeuges auf der Bodenplattform gegenüber den zugeordneten Hilfsgeräten außerhalb der Bodenplattform, vorzugsweise fluchtend, ausgerichtet werden. Gegenstand der Erfindung ist somit eine Vorrichtung zur Versorgung eines Kraftfahrzeugs mit Betriebsmitteln, die mittels eines oder mehrerer Hilfsgeräte während eines Haltes an einer Versorgungsbasis über eine Versorgungsstelle des Kraftfahrzeuges diesem zugeführt werden, wobei die Hilfsgeräte, vorzugsweise mittels elektronischer Steuerungsvorrichtungen, in eine betriebsmäßige Koordinationslage zu der Versorgungsstelle bringbar und wieder von ihr entfernbar sind, wobei die betriebsmäßige Koordinationslage zwischen der einen oder auch weiteren Versorgungsstellen des Kraftfahrzeuges einerseits und den diesen zugeordneten Hilfsgeräten andererseits mittels einer das Kraftfahrzeug aufnehmenden Bodenplattform erreicht wird, die wenigstens in einer Horizontalebene, z.B. in X und Y Richtung, quasi schwimmend, verstellbar ist, wobei die Verstellung der Bodenplattform mittels einer Steuerung, vorzugsweise einer elektronischen Steuerung, erreichbar ist und die Verstellung dafür sorgt, daß die Versorgungsstellen des Kraftfahrzeuges auf der Bodenplattform gegenüber den zugeordneten Hilfsgeräten, die vorzugsweise ortsfest angeordnet sind, außerhalb der Bodenplattform ausgerichtet werden.

Bevorzugte Ausführungsformen sind Gegenstand der Unteransprüche.

Der Vorteil dieser Vorrichtung besteht darin, daß alle Versorgungsstellen des Kraftfahrzeuges gleichzeitig gegenüber den Hilfsgeräten ausgerichtet werden. Die Handhabungen zur Versorgung können also alle gleichzeitig einsetzen. Die Vorrichtung setzt natürlich voraus, daß die Dimensionierungen des Kraftfahrzeuges bekannt sind und daß die ortsfest stehenden Hilfsgeräte bei exakt stehendem Kraftfahrzeug exakt den Versorgungsstellen gegenüber stehen. Die Vorrichtung ist deshalb zunächst derart ausgelegt, daß die Zuordnung der Versorgungsstellen am Fahrzeug auf der Bodenplattform einerseits und den Hilfsgeräten außerhalb der Versorgungsplattform andererseits auf die Dimensionen eines bestimmten Fahrzeuges abgestimmt ist.

Die Handhabung der Vorrichtung erfolgt derart, daß das Kraftfahrzeug beim Einfahren in die Box oder an eine Serviceinsel so präzise wie möglich auf vorbereitete Markierungen fährt und darauf anhält. Dies ist nicht schwierig, weil dies ein Kraftfahrer ständig übt, beispielsweise beim Einfahren in eine Waschanlage. Turnierfahrer sind noch wesentlich geübter.

Um die Vorrichtung vielseitiger zu machen, ist nach einer weiteren Ausgestaltung der Erfindung vorgesehen, daß entsprechend einer datenmäßigen Vorgabe eines variierenden Fahrzeugaufbaues die Stellung der Hilfsgeräte außerhalb der Bodenplattform an verschiedene Fahrzeugtypen durch elektronisch geregeltes Versetzen anpaßbar ist.

Die wichtigste Versorgungsstelle ist der Tankstutzen. Nach einer weiteren Ausgestaltung der Erfindung ist deshalb vorgesehen, daß eine Versorgungsstelle des Fahrzeuges der Tankstutzen und das zugehörige Hilfsgerät der Füllkopf einer Treibstoffleitung sind.

Weitere wichtige Versorgungsstellen bilden die Räder. Nach einer weiteren Ausgestaltung der Erfindung ist deshalb vorgesehen, daß weitere Versorgungsstellen des Fahrzeuges die mit den Rädern versehenen Radnaben und daß die zugeordneten Hilfsgeräte die Mutternschrauber für die Radmuttern sind.

Nach einer weiteren Ausgestaltung der Erfindung ist vorgesehen, daß die außerhalb der Bodenplattform angeordneten Hilfsgeräte bei Stillstand des Fahrzeuges und dem Ende der Bodenplattenausrichtbewegung axial fluchtend zu den Versorgungsstellen an diesen heranführbar sind, um die erforderlichen Handhabungen durchzuführen. Steht das Kraftfahrzeug, dann erfolgt der Verstellvorgang der Bodenplattform; er ist in Bruchteilen einer Sekunde abgeschlossen. Dann fahren die Hilfsgeräte möglicherweise mit einer Nachstellhilfe an die Versorgungsstellen heran und vollziehen die notwendigen Handlungen.

Es besteht die Möglichkeit, daß ein Füllkopf versagt. Nach einer weiteren Ausgestaltung der Erfindung ist deshalb vorgesehen, daß bei der Zapfpistole zwei Füllköpfe gleichwertig nebeneinander angeordnet sind, wobei beim Ausfall eines Füllkopfes der zweite Füllkopf dessen Funktion übernimmt.

Die Räder insbesondere von Turnierfahrzeugen sind breit und schwer zu handhaben. Es empfiehlt sich deshalb, die Räder in einer Warteposition nahe den Versorgungsstellen zu halten und mechanisch den Versorgungsstellen zuzuführen. Damit läßt sich zusätzlich Zeit sparen. Nach einer weiteren Ausgestaltung der Erfindung sind deshalb Traversen vorgesehen, die Ersatzräder oder Austauschräder aufnehmen, wobei an den Traversen vorhandene Radvorhalte und Radleiteinrichtungen dafür sorgen, daß nach dem Entfernen eines Rades von seiner Radnabe ein auszutauschendes Rad vor die entsprechende Radnabe gelangt, aufgesteckt und mittels des zugehörigen Hilfsgerätes festgesetzt wird. Die Vorgänge können vollautomatisch ohne Handarbeit erfolgen.

Nach einer weiteren Ausgestaltung der Erfindung ist vorgesehen, daß die Bodenplattform die obere Abschlußplatte einer elektronisch gesteuerten Verschiebevorrichtung ist, die als Stelleinheit in eine Bodenmulde eingesetzt ist und die über Traggestänge die Bodenplattform trägt und steuert. Die Verschiebevorrichtung ist damit eine Einheit, die in die Bodenmulde einsetzbar ist und aus dieser wieder herausnehmbar ist. So kann sie das Rennteam von einem Einsatzort zu einem anderen mitnehmen.

Die Erfindung wird anhand der schematischen Zeichnung näher erläutert. Es zeigen:

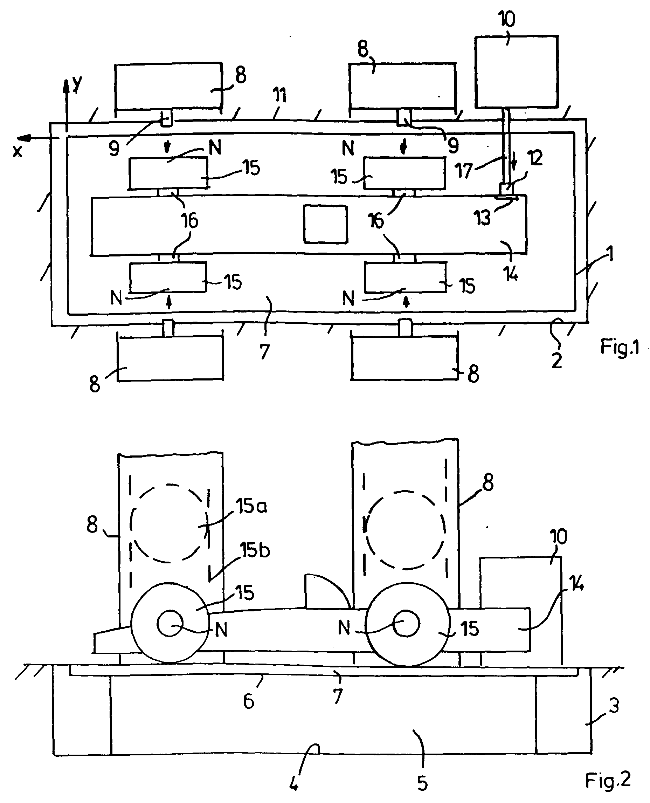

Fig. 1 eine Draufsicht auf die Vorrichtung zur Versorgung von Kraftfahrzeugen mit Betriebsmitteln, die eine Bodenplattform aufweist, die in den x- und y-Koordinaten einer horizontalen Ebene mit elektrischen und elektronischen Stellmitteln schwimmend verstellbar ist, um Versorgungsstellen an einem auf sie aufgefahrenen Kraftfahrzeug, wie Tankstutzen und Räder, in fluchtende Lage zu Versorgungshilfsgeräten, wie einer Tankvorrichtung und Mitteln zur Radmontage zu bringen,
Fig. 2 die Vorrichtung nach Fig. 1 in Seitenansicht, wobei man auch erkennt, daß in Traversen Austauschräder für eine Ummontage bereitgehalten werden.

Fig. 1 zeigt eine Verstelleinheit 1, die in eine Bodenmulde 2 eingelassen ist. Die Verstelleinheit 1 besteht aus einem Rahmen 3, der etwa passend in der Bodenmulde 2 sitzt. Am Boden 4 der Verstelleinheit 1 stützt sich eine Verschiebevorrichtung 5 ab, die an ihrer Oberseite 6 eine Bodenplattform 7 trägt. Die Verschiebevorrichtung 5 ist in der Lage, die Bodenplattform 7 in einer horizontalen, durch die Koordinaten x- und y-gebildeten Ebene zu verstellen. Die Verstellung erfolgt über nicht dargestellte Sensoren und Lichtstrahlen oder dergleichen.

Die Verstelleinheit 1 wird umgeben von im Prinzip ortsfest um sie herum angeordneten Hilfsgeräten 8, 9 und 10. Die Hilfsgeräte 8 sind vorzugsweise am Muldenrand 11 stehende Traversen 8, in denen Austauschräder 15a bereitgehalten werden können. Die Traversen 8 sind mit angedeuteten Radleiteinrichtungen 15b und nicht dargestellten Radvorhalten versehen, die eine sofortige Bereitstellung beim Radaustausch gewährleisten. Je eine Traverse steht vor einem auszutauschenden Rad. Die Hilfsgeräte 9 sind Radmutterschrauber, mit denen die Radmuttern abgeschraubt oder aufgeschraubt werden. Das Hilfsgerät 10 ist ein Tankroboter, dessen Füllkopf 12 automatisch an den Tankstutzen 13 eines Kraftfahrzeuges 14 ansetzbar ist. Die Hilfsgeräte 8, 9 und 10 stehen ortsfest am Rand 11 der Bodenmulde 2. In Fig.1 ist der Füllkopf 12 bereits an den Tankstutzen 13 herangefahren. Die Mutternschrauber 9 sind der besseren Übersicht wegen noch zurückgezogen.

Auf der Bodenplattform 7 steht in der Zeichnung das Kraftfahrzeug 14. Die Form deutet auf ein Turnierfahrzeug hin. Das Kraftfahrzeug 14 hat übliche vier Räder 15, die auf die Naben N von Radachsen 16 aufgesteckt sind. Am Heck des Kraftfahrzeuges befindet sich der Tankstutzen 13. Die Radnaben N und der Tankstutzen 13 sind verallgemeinert als Versorgungsstellen am Kraftfahrzeug 14 bezeichnet.

Die Versorgungsstellen am Kraftfahrzeug 14, also die Radnaben N und der Tankstutzen 13 des Kraftfahrzeuges 14, liegen, wenn das Kraftfahrzeug 14 exakt auf die Bodenplattform 7 aufgefahren ist, den ihnen zugeordneten Hilfsgeräten genau fluchtend gegenüber. Das bedeutet, daß die Mutternschrauber 9 der Räder 15 und die Treibstoffleitung 17 unmittelbar fluchtend automatisch an die Radnaben N oder den Tankstutzen 13 herangeführt werden können. Eine kleine Korrektur kann eine Sensormessung vornehmen.

Dieser günstigste Fall wird aber nicht häufig auftreten. Die Vorrichtung nach der Erfindung ist vorzugsweise für Boxen von Rennställen gedacht, natürlich aber im täglichen Leben einsetzbar. Bei einer Rennveranstaltung fährt der Fahrer sein Kraftfahrzeug 14 auf die Bodenplattform 7 so exakt wie möglich auf. Markierungen zeigen ihm den vorgesehenen Platz an, auf dem er sein Kraftfahrzeug zum Stehen bringen soll. Ist die Sollstellung nicht genau erreicht, dann verstellt sich die Bodenplattform mittels einer Sensormessung, Lichtschrankensteuerungen oder dergleichen in Bruchteilen von Sekunden so, daß die Versorgungsstellen N an den Radnaben und der Tankstutzen 13 am Kraftfahrzeug 14 mit den Hilfsgeräten 8, 9 und 10 fluchten. Danach kann sofort mit der Versorgung begonnen werden.

Es kommt vor, daß die Füllköpfe 12 der Treibstoffleitung 17 versagen. Deshalb ist vorgesehen, daß zwei Füllköpfe 12 gleichwertig nebeneinander angeordnet sind, wobei beim Ausfall eines Füllkopfes 12 ein zweiter Füllkopf dessen Funktion übernimmt.

Wenn die Vorrichtung zum Versorgen von Kraftfahrzeugen 14 für mehrere Fahrzeugtypen eingesetzt werden soll, dann läßt sich das ohne weiteres einrichten. Die Hilfsgeräte 8, 9 und 10 werden elektronisch gesteuert verrückbar angeordnet. Jedes Kraftfahrzeug 14 hat bestimmte, ihm eigene Dimensionen. Die Abstände der Achsen und deren Höhe gegenüber dem Boden und die Lage des Tankstutzens (13) werden verschieden sein. Diese unterschiedlichen Dimensionen kann man in einer Typenkarte oder in Typenzahlen erfassen. Durch ein Aufrufen der Typenzahlen, ein Einschieben der Typenkarte in das Stellgerät oder ein elektrisches Erfassen wird die Stellung der Hilfsgeräte (8, 9 und 10) in Sekundenschnelle geändert und dem anderen Fahrzeugtyp angepaßt.

## Patentansprüche

1. Vorrichtung zur Versorgung eines Kraftfahrzeugs (14) mit Betriebsmitteln, die mittels eines oder mehrerer Hilfsgeräte (8, 9, 10, 12) während eines Haltes an einer Versorgungsbasis über eine Versorgungsstelle des Kraftfahrzeuges (14) diesem zugeführt werden, wobei das (die) Hilfsgeräte (8, 9, 10, 12) in eine betriebsmäßige Koordinationslage zu der Versorgungsstelle (13) bringbar und wieder von ihr entfernbar sind, wobei die betriebsmäßige Koordinationslage zwischen der einen oder auch weiteren Versorgungsstellen (N und 13) des Kraftfahrzeuges einerseits und dem diesen zugeordnetem(n) Hilfsgerät(en) (8, 9, 10, 12) andererseits mittels einer das Kraftfahrzeug (14) aufnehmenden Bodenplattform (7) erreicht wird, die wenigstens in einer Horizontalebene, quasi schwimmend, verstellbar ist, wobei die Verstellung der Bodenplattform (7) mittels einer Steuerung erreichbar ist und die Verstellung dafür sorgt, daß die Versorgungsstelle(n) (N, 13) des Kraftfahrzeuges (14) auf der Bodenplattform (7) gegenüber dem (den) zugeordneten Hilfsgerät(en) (8, 9, 10, 12) außerhalb der Bodenplattform (7) ausgerichtet werden.

2. Vorrichtung nach Anspruch 1, dadurch gekennzeichnet, daß die Zuordnung der Versorgungsstelle(n) (N, 13) am Kraftfahrzeug (14) auf der Bodenplattform (7) einerseits und den Hilfsgeräten (8, 9, 10, 12) außerhalb der Bodenplattform (7) andererseits auf die Dimensionen eines bestimmten Kraftfahrzeuges (14) abgestimmt ist.

3. Vorrichtung nach einem oder beiden der Ansprüche 1 und 2, dadurch gekennzeichnet, daß entsprechend einer datenmäßigen Vorgabe eines variierenden Kraftfahrzeugaufbaues die Stellung der Hilfsgeräte (8, 9, 10, 12) außerhalb der Bodenplattform (7) an verschiedene Kraftfahrzeugtypen durch elektronisch geregeltes Versetzen anpaßbar ist.

4. Vorrichtung nach einem oder mehreren der Ansprüche 1 bis 3, dadurch gekennzeichnet, daß eine Versorgungsstelle (13) des Kraftfahrzeuges (14) der Tankstutzen und das zugehörige Hilfsgerät der Füllkopf (12) einer Treibstoffleitung sind.

5. Vorrichtung nach einem oder beiden der Ansprüche 1 und 3, dadurch gekennzeichnet, daß weitere Versorgungsstellen (N) des Kraftfahrzeuges (14) die mit den Rädern (15) versehenen Radnaben und daß die zugeordneten Hilfsgeräte die Mutternschrauber (9) für die Radmuttern sind.

6. Vorrichtung nach einem oder mehreren der Ansprüche 1 bis 5, dadurch gekennzeichnet, daß die außerhalb der Bodenplattform (7) angeordneten Hilfsgeräte (8, 9, 10, 12) bei Stillstand des Kraftfahrzeuges und dem Ende der Bodenplattenausrichtbewegung axial fluchtend zu den Versorgungsstellen (N, 13) an diesen heranführbar sind, um die erforderlichen Handhabungen durchzuführen.

7. Vorrichtung nach Anspruch 4, dadurch gekennzeichnet, daß zwei Füllköpfe (12) gleichwertig nebeneinander angeordnet sind, wobei beim Ausfall des Füllkopfes (12) ein zweiter Füllkopf dessen Funktion übernimmt.

8. Vorrichtung nach einem oder mehreren der Ansprüche 1 bis 7, dadurch gekennzeichnet, daß Traversen (8) vorgesehen sind, die Ersatzräder (15a) oder Austauschräder (15a) aufnehmen, wobei an den Traversen (8) vorhandene Radvorhalte und Radleiteinrichtungen (15b) dafür sorgen, daß nach dem Entfernen eines Rades (15) von seiner Radnabe (N) ein auszutauschendes Rad (15) vor die entsprechende Radnabe (N) gelangt, aufgesteckt und mittels des zugehörigen Hilfsgerätes (9) festgesetzt wird.

9. Vorrichtung nach einem oder mehreren der Ansprüche 1 bis 8, dadurch gekennzeichnet, daß die Bodenplattform (7) die obere Abschlußplatte einer elektronisch gesteuerten Verschiebevorrichtung (5) ist, die als Stelleinheit (1) in eine Bodenmulde (2) eingesetzt ist und die über Traggestänge die Bodenplattform (7) trägt und steuert.
